# EUROPEAN PATENT APPLICATION

(11) **EP 4 488 649 A1**
(43) Date of publication of application: **08.01.2025**
(21) Application number: 23183727.9
(22) Date of filing: 05.07.2023
(51) Int. Cl.: G01M 5/00, G01M 11/08

(54) **FIXATION ELEMENT AND METHOD OF INSTALLING THE FIXATION ELEMENT**

(71) Applicant: Ørsted Wind Power A/S, 7000 Fredericia (DK)
(72) Inventor: Jensen, Carsten H., 7000 Fredericia Skaerbaek (DK); Svendsen, Christian Hauge, 7000 Fredericia Skaerbaek (DK); Mejbom, Kim, 7000 Fredericia Skaerbaek (DK)
(74) Representative: Lewis Silkin LLP

(57) **Abstract**

A fixation element (20,40) for fixing a fibre optic cable (16) along a high-voltage cable assembly (10). The fixation element (20,40) comprising a body (22, 42) for connection to the high-voltage cable assembly (10), and a fixture formation (26,46) provided on the body (22,42) configured to secure the fibre optic cable (16) against the high-voltage cable assembly (10) when the body (22,42) is connected to the high-voltage cable assembly (10).

## Description

### Introduction

The present invention relates to a fixation element for fixing a fibre optic cable to a high-voltage cable assembly. For example, fixation part for securing High Voltage (HV) Cables in position. The disclosure is particularly relevant to the fixing of a fibre optic cable along one or more high-voltage cables of a high-voltage cable assembly of a wind turbine system. The disclosure may be particularly relevant to fibre optic cables for more accurate temperature sensing.

### Background

Wind power is becoming an increasingly important part of our energy supply infrastructure, offering a clean and sustainable source of energy for generating electricity.

Wind turbines can be installed on land or offshore, and are typically located in clusters as a wind farm in areas with high wind speeds, such as coastal areas, open plains, or in offshore locations. The electric power generated by each wind turbine is transmitted to the electrical grid via one or more high-voltage cables which connect through a high-voltage substation. The substation will typically receive high-voltage cable feeds from a plurality of wind turbines, with the cabling commonly being routed through underground channels, duct banks, tunnels, passages and corridors. As such, this high-voltage cabling is fed through so-called 'free air', forming a wind turbine system, which may include a number of wind turbines connected through a substation to the grid using cabling and cable passages.

One issue which arises with the transmission of very high-voltages and current through cabling is the generation of high waste heat, which can become a limiting factor of the HV cable capacity. That is, resistance in the wiring, manufacturing tolerances and material variations can result in hot-spots forming along high-voltage cables during use. Accordingly, due to the high temperatures produced from the transmission of power through the high-voltage cables, it is important to monitor the temperature along high-voltage cables to ensure that operating temperatures remain within safe limits throughout the wind turbine system and temperatures are moderated to maintain the operating lifespan (e.g. 35-40 years), as well as obtain the highest possible operating availability of the windfarm. For example, high temperatures can result in the breakdown of the main insulation material surrounding the high-voltage cables, which may result in outage of the windfarm, an electrocution hazard, the potential initiation of a fire, or short circuiting.

In this connection, during a short circuit, a large amount of current is drawn through the high-voltage cable involved in the fault, thereby creating a magnetic field around the high-voltage cable, which results in large forces being generated between the high-voltage cables. In some cases, these forces can be so large that they can damage the cables due to axial forces acting on them or the equipment that they are connected to (e.g., the cable cleats or other nearby equipment).

In view of the above it is particularly important to monitor the temperature along the full length of the high-voltage cables of a wind turbine system.

Temperature sensing of high-voltage cables is particularly important when wind turbines are located in areas having higher average environmental temperatures, which results in a higher operating temperature of the high-voltage cables, e.g. the maximum allowed temperature on the conductor may be, for instance, 90°c. This means the potential for hot-spots exceeding safe operating temperatures is far greater, which in turn can result in a reduced lifespan of the cables. In this respect, to maximise the working lifespan of the high-voltage cables, their temperature typically needs to be kept below 90°c. Where temperatures exceed this, particularly for sustained durations, the wind turbine may have to be curtailed or turned off to mitigate the risk of damage to the high-voltage cables and to maintain the cable's service life.

The temperature of the high-voltage cables can be monitored by temperature sensors placed along the high-voltage cable at specific locations, typically at connection points. In recent years, distributed temperature sensing (DTS) has been used to accurately measure the temperature along the whole length of the high-voltage cable.

DTS is a technology in which a fibre optic cable is used to measure temperature along its length. DTS works by using a laser to send a pulse of light down the fibre optic cable. As the light passes through the fibre optic cable, it is scattered by an amount proportional to the temperature of the material, based on a phenomenon called the Raman effect. As such, by measuring the amount of scattering, a temperature profile of the three single core HV Cable conductors along the length of the fibre optic cable can be calculated.

Conventionally, fibre optic cables are attached to the high-voltage cables by adhesive tape (e.g. 3M or similar). However, adhesive tape relies on manual fitting to securely fix the fibre optic cable in position, and such tape has a short lifespan relative to the designed lifespan of the wind turbine, e.g. the warm, free air, environment makes the glue on the tape weak over time. As such, the position of the fibre optic cable and its contact with the high-voltage cable may vary over the length of the high-voltage cable, and with time as the tape loses its adhesiveness. This can limit the sensor system's ability to accurately measure the temperature. At the same time, maintenance of the sensing system is challenging because of it relies on manual repair of the attachments along many hundreds of meters of high-voltage cable. Furthermore, in the event of more major faults in the high-voltage cable, such as a short circuit, the heat and magnetic forces generated may cause the tape and fibre-optic cable to detach altogether, potentially leading to a failure to register the elevated temperature at all.

Accordingly, there is a need to address the above problems with fixing fibre optic cables to high-voltage cables, such as those installed in free air applications, to accurately measure the temperature along the length of the high-voltage cables, and to structurally support the fibre optic cable so that it remains connected to the high-voltage cables in the event of a short circuit.

### Summary

Considering the above, the present invention seeks to provide an improved fixing that allows for consistent and robust contact between the fibre optic cable and the high-voltage cabling to maintain accurate temperature sensing of the HV Cable, such as HV single core conductors. The fixing element may be compatible with existing cable cleats of high-voltage cables, so that fibre optic cables can be retrofit to existing wind turbine systems.

According to a first aspect of the invention, there is provided a fixation element for fixing a fibre optic cable along a high-voltage cable assembly as defined in claim 1 hereinafter. Specifically, a fixation element for fixing a fibre optic cable along a high-voltage cable assembly may be provided, the fixation element comprising: a body for connection to the high-voltage cable assembly; and a fixture formation provided on the body configured to secure the fibre optic cable against the high-voltage cable assembly when the body is connected to the high-voltage cable assembly.

In this way, the fibre optic cable can be secured to the high-voltage cable assembly of a wind turbine system. This provides for connection in a consistent manner to ensure that the fibre optic cable is maintained in an optimal position for temperature sensing. The provision of a formed body provides for consistency along the length of the cable assembly and a robust fixing to ensure the fibre optic cable remains connected for an extended lifespan, and displacement can be resisted in the event of, for instance, a short circuit. In one form, the fixation element is for fixing high-voltage cable arrangements in free air applications, such as where high-voltage cabling is fed through tunnels and hollow passages within a structure. In one form, the high-voltage cable arrangement includes three phase cables, with the fibre optic cable being attached thereto.

In one form, the fixture formation comprises an engagement surface profiled to mate against the fibre optic cable. In this way, the fixture formation provides a surface to receive the fibre optic cable, such that the fixture formation secures the fibre optic cable in position once the fixation element is secured to the high-voltage cable assembly. The profile of the engagement surface may allow the fibre optic cable to be securely positioned relative to the high-voltage cable assembly, without crimping the cable, which could otherwise cause damage to its optical core and affect its performance and measuring accuracy.

In one form, the fixture formation is configured to clamp the fibre optic cable against the high-voltage cable assembly. In this way, the fibre optic cable may be braced against the high-voltage cable assembly to maintain contact for heat conduction and ensure that the cable remains in position.

In one form, the fixation element further comprises a cleat attachment fixture configured to attach the fixation element to a cable cleat of the high-voltage cable assembly. In this way, the fixation elements can be secured to existing cable cleats (such as 3-foil type cleats), such that the fibre optic cable is held in place. This provides a secure mounting base relative to the high-voltage cables and helps to ensure mounting consistency.

In one form, the cleat attachment fixture comprises an engagement face profiled to mate against the cable cleat. In this way, the cleat attachment fixture provides a surface profiled to form a secure mating engagement with a portion of the cable cleat to provide a stable fixation base for the body.

In one form, the cleat attachment fixture is configured to be press fit against the cable cleat. In this way, a fixation element can be secured to the cable cleat in a simple and cost-effective manner. That is, the attachment fixture may comprise a resilient interface surface or be formed of a resilient body, which allows it to deform slightly when forced under pressure to engage around a part of the cable cleat. This may thereby form an interference fit between two parts for fixing the fixation element. The press-fit installation may thereby allow for rapid fixing, and hence a reduced installation time, whilst minimising the risk of, for instance, overtightening couplings.

In one form, the cleat attachment fixture comprises two parts, wherein the two parts are securable together to form a clamping engagement around the cable cleat for attaching the fixation element to the cable cleat. In this way, the cleat attachment fixture may be fitted around the cable cleat and can be secured by a coupling to clamp it in place. This allows for a secure connection for holding the fibre optic cable in place, for example, also during short circuit situations.

In one form, the cleat attachment fixture further comprises one or more coupling formations for receiving a coupling element for forcing the two parts together to form the clamping engagement. In this way, the two parts can be securely connected together with the coupling formations providing for a consistent clamping force and maintaining the alignment of the two parts.

In one form, the cleat attachment fixture comprises a locating face profiled to mate against a fixing member of the cable cleat. In this way, the fixation element is further secured against the cable cleat. This may allow the fixation element to be rotationally locked relative to the cable cleat.

In one form, the high-voltage cable assembly comprises two or more high-voltage cables, and the body is configured to braced by a band for fixing the body to the high-voltage cables. In this way, the optic fibre cables can be secured to the high-voltage cable assembly between the cable cleats.

In one form, the body comprises two securing faces profiled to mate against the high-voltage cables respectively, the two securing faces located at opposite sides of the body. In this way, the fixation element can be positioned more accurately for supporting the fibre optic cable between two adjacent high-voltage cables. The securing faces also act to further support the high-voltage cables in position relative to each other.

According to a further aspect of the invention, there is provided a method of installing a fixation element for fixing a fibre optic cable along a high-voltage cable assembly as defined in claim 12 hereinafter. Specifically, a method of installing a fixation element for fixing a fibre optic cable along a high-voltage cable assembly is provided, the method comprising: connecting a body to the high-voltage cable assembly; and securing the fibre optic cable by a fixture formation provided on the body configured to secure the fibre optic cable against the high-voltage cable assembly.

In one form, the step of securing the fibre optic cable comprises mating an engagement surface of the fixture formation against the fibre optic cable.

In one form, the method further comprises: clamping the fibre optic cable against the high-voltage cable assembly by the fixture formation.

In one form, the method further comprises: bracing the body by a band to fix the body to the high-voltage cables, wherein the high-voltage cable assembly comprises two or more high-voltage cables.

### Brief Description of Drawings

Illustrative embodiments of the present invention will now be described with reference to the accompanying drawings in which:
Figure 1 illustrates an isometric view of a high-voltage cable assembly according to an illustrative example;
Figure 2 illustrates a first type of fixation element shown fitted to the high-voltage cable assembly of Figure 1;
Figure 3 illustrates a simplified cross-sectional view of a high-voltage assembly with the fixation element shown in Figure 2 fitted.
Figure 4 illustrates a second type of further fixation element shown fitted to a cable cleat of the high-voltage cable assembly of Figure 1; and
Figure 5 illustrates a simplified cross-sectional view of the fixation element shown in Figure 5.

### Detailed Description

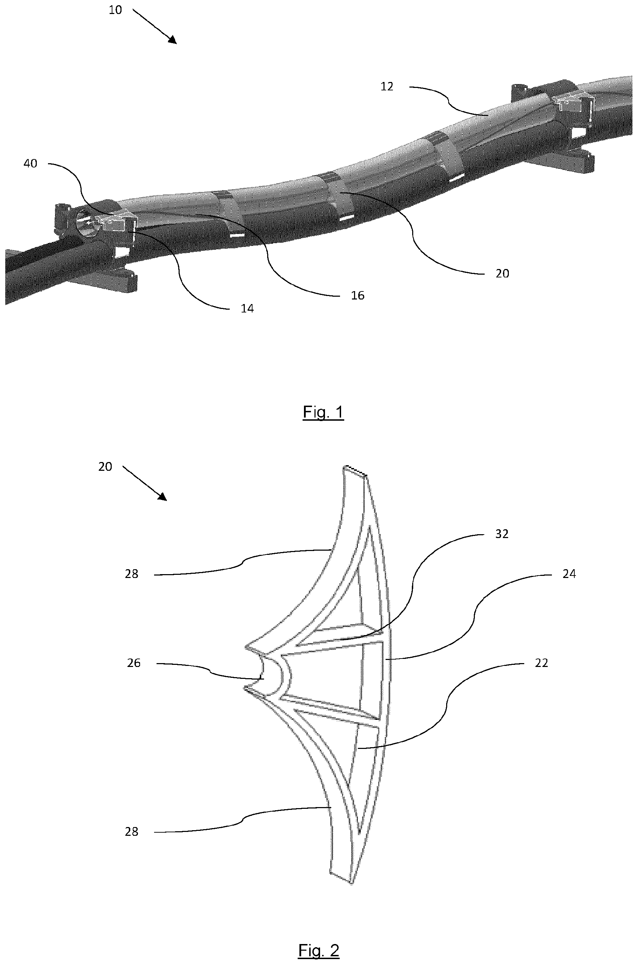

Figure 1 shows a high-voltage cable assembly 10 according to one arrangement of this disclosure. The high-voltage cable assembly 10 forms part of a wind turbine system for conveying electricity between turbines and a substation. The high-voltage cable assembly 10 comprises one or more high-voltage cables 12 that are held together by short circuit proven cable cleats 14 along the length of the high-voltage cable assembly 10. The cable cleats 14 act to support the cabling and position it within the wind turbine system. For example, the cleats may be used to mount the cables to wall brackets as the cabling is fed along underground corridors for connecting wind turbines in the system. In the example shown in Figure 1, there are three high-voltage cables 12 which are connected by the cable cleat 14 in a trefoil arrangement, with each cable 12 associated with a phase of the high-voltage transmission. Whilst three high-voltage cables 12 are shown in Figure 1, other arrangements may comprise one or more high-voltage cables 12.

To monitor the temperature along the length of the high-voltage cables 12, a fibre optic cable 16 is provided along the high-voltage cable assembly 10. The fibre optic cable 16 measures continuously the temperature along the full length of the high-voltage cables 12 using DTS. To measure the temperature of each high-voltage cable more accurately, the fibre optic cable 16 is positioned as close as possible to the middle of the high-voltage cable assembly 10. As shown in Figure 1, the fibre optic cable 16 is positioned on one of the seams of the trefoil high-voltage cable 12 arrangement. The seam is the area at the intersection of two high-voltage cables. In other arrangements, the fibre optic cable 16 may be positioned at a side of the high-voltage cable 12, or multiple fibre optic cables 16 may be positioned on each of the high-voltage cables 12.

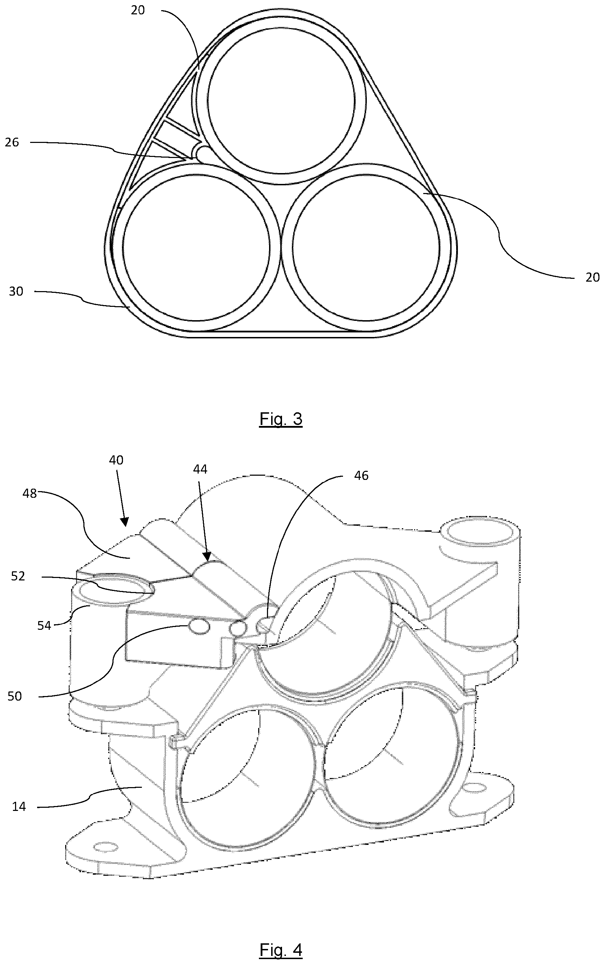

As shown in Figures 2 and 3, a first type of fixation element 20 is provided for fixing the fibre optic cable 16 along a high-voltage cable assembly. The fixation element 20 may also provide additional support for the high-voltage cables 12 between the cable cleats 14 of the high-voltage cable assembly 10, such that the high-voltage cables 12 remain connected together in the event of a short circuit.

In reference to Figure 2, the fixation element 20 according to this first type comprises a body 22, a bracing surface 24, and a fixture formation 26. The body 22 further comprises two securing faces 28, that are each profiled to mate against the high-voltage cables 12, as shown in Figure 3. The two securing faces 28 are configured to align the body 22 for holding the fibre optic cable 16 at the seam between two of the high-voltage cables 12 when the body 22 is fitted. As such, the two surfaces are circular, with a radius matching the radius of the high-voltage cables 12. Each securing surface 28 is positioned at opposite sides of the body 22 of the fixation element 20, such that the fixation element 20 can be placed to extend into the seam between two high-voltage cables 12, as shown in Figures 1-3. In other arrangements, the two surfaces may have other profiles which match the profile of the high-voltage cables 12.

Referring to Figures 2 and 3, in this embodiment, the bracing surface 24 of the fixation element 20 provides a curved outer face for bracing by a band 30 wrapped around the high-voltage cable assembly 10. For example, the band 30 can be a coated stainless steel band, but can alternatively be other suitable materials. As shown in Figure 3, the band 30 is wrapped around the high-voltage cables 12 and braces the fixation element 20 in position against the high-voltage cables 12. Once fitted, the fixation element 20 provides additional support to the high-voltage cables 12 between the cable cleats 14 for ensuring the high-voltage cables 12 remain secured together.

The fixture formation 26 comprises an engagement surface profiled to mate against the fibre optic cable 16. As shown, in this example the engagement surface has a circular profile which matches the profile of the fibre optic cable 16. That is, the radius of curvature of the engagement surface may be the same as the radius of the fibre optic cable 16. The engagement surface of the fixture formation 26 acts to secure the fibre optic cable 16 against the high-voltage cables 12.

The fibre optic cable 16 is secured in place by the engagement surface of the fixture formation 26 once the fixation element 20 is positioned between the high-voltage cables 12. As such, the fibre optic cable 16 is held in place between the high-voltage cables 12 to ensure that the fibre optic cable 16 remains in secure contact with their outer faces to more accurately measure the temperature of the high-voltage cables 12 along the length of the high-voltage cable assembly 10.

The body 22 of the fixation element 20 further comprises at least one support 32 for reinforcing the structure of the fixation element 20 when it is braced against the high-voltage cables 12 by the band 30. The body 22 of the fixation element 20 can be manufactured, for example, from a metal or polymer material.

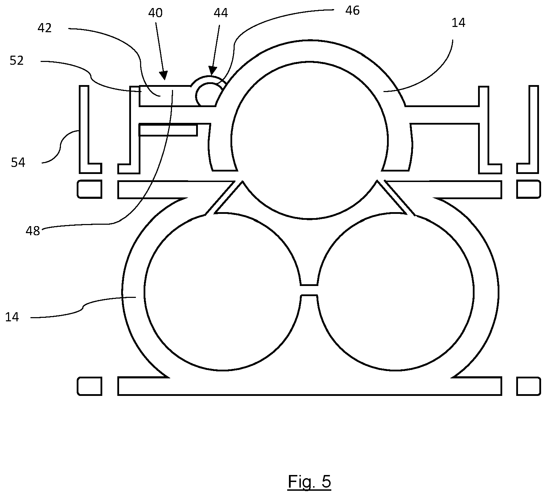

Figures 4 to 5 show a second type of fixation element 40 used to secure the optical fibre cable 16 to the cable cleats 14. This type of fixation element 40 comprises a body 42, and a fixture formation 44 provided on the body 42. The fixation element 40 is designed to be fitted to existing cable cleats 14, thereby enabling the fibre optic cables 16 to be easily fitted after the high-voltage cable assembly 10 has been installed.

The fixture formation 44 is provided on the body 42 of the fixation element 40 for securing the fibre optic cable 16 to the high-voltage cable assembly 10. The fixture formation 44 in this embodiment comprises an engagement surface 46 profiled to mate against the fibre optic cable 16. The fixture formation 44 is configured to clamp the fibre optic cable 16 against the high-voltage cable assembly 10 to secure the fibre optic cable 16 during use and in the event of a short circuit. For example, the profile of the engagement surface can be circular, and may be profiled to match the profile of the fibre optic cable 16. For example, the radius of curvature of the engagement surface can be the same as the radius of the fibre optic cable 16.

As shown in Figure 4, the fixation element 40 further comprises a cleat attachment fixture 48 configured to secure the fixation element 40 to the cable cleat 14 of the high-voltage cable assembly 10. The cleat attachment fixture 48 comprises a locating face 52 profiled to mate against the cable cleat 14. As such, the cleat attachment fixture 48 is sized and shaped to be compatible with a standardised cable cleat 14. In this example, the fixation element 40 is provided in two parts and includes a coupling formation 50 for receiving a coupling (not shown) for drawing the parts together to secure the fixation element 40 to the cable cleat 14. In another example, the cleat attachment fixture 48 is configured to be press fit against the cable cleat 14. The cleat attachment fixture 48 can have a grip configured to engage the cable cleat 14 and, when the fixation element 40 is secured around the cable cleat 14, the grip wraps around part of the cable cleat 14 to secure the fixation element 14. In this way, the fixation element 40 is clamped to the cable cleat 14.

The fixation element 40 in this arrangement is split in half to form a clamping arrangement, although it will be understood that in other arrangements, the cleat attachment fixture 40 may be split according to other ratios. The two parts may then be securable together to form a clamping engagement around the cable cleat 14.

As mentioned above, the cleat attachment fixture 48 further comprises one or more coupling formations 50 for receiving a coupling element for forcing the two parts together to form the clamping engagement. In one example, the coupling formations 50 may be openings configured to receive a fastener, such as a stainless screw or nut and bolt, to force the two parts together. In another example, the coupling formation may be a spring cleat or a hook that can force the two parts together. In this way, the two parts are forced and secured together to form the clamping formation around the cable cleat 14. In other arrangements, the cleat attachment fixture 48 may have a plurality of coupling formations for forcing the two parts together.

As shown in Figure 4, the fixation element 40 comprises the locating face 52 profiled to mate against a fixing member 54 of the cable cleat 14. For example, the profile of the locating face 52 can be circular, and the profile of the locating face fits the profile of the fixing member 54 of the cable cleat 14. In this way, the fixation element 40 can be locked relative to the cable cleat 14.

Accordingly, with the above arrangements, the fixation elements 20,40 provide a secure and consistent fixture for the fibre optic cable 16 to a cable cleat 14. As such, a more accurate temperature measurement of the high-voltage cable assembly can be determined, and at the same time, the fixation element 20,40 is resistant to movement over time and forces generated in the event of a short circuit. This provides for an improved operating lifespan and lower maintenance overhead and optimized load conditions of the conductor due to a more accurate measurement of the ampacity.

It will be understood that the illustrated embodiments show applications only for the purposes of explanation. In practice, the invention may be applied to many different configurations, where the embodiment is straightforward for those skilled in the art to implement.

For example, the description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

## Claims

1. A fixation element for fixing a fibre optic cable along a high-voltage cable assembly, the fixation element comprising:
a body for connection to the high-voltage cable assembly; and
a fixture formation provided on the body configured to secure the fibre optic cable against the high-voltage cable assembly when the body is connected to the high-voltage cable assembly.

2. The fixation element according to claim 1, wherein the fixture formation comprises an engagement surface profiled to mate against the fibre optic cable.

3. The fixation element according to claim 1 or 2, wherein the fixture formation is configured to clamp the fibre optic cable against the high-voltage cable assembly.

4. The fixation element according to any one of claims 1 to 3, wherein the fixation element further comprises a cleat attachment fixture configured to attach the fixation element to a cable cleat of the high-voltage cable assembly.

5. The fixation element according to claim 4, wherein the cleat attachment fixture comprises an engagement face profiled to mate against the cable cleat.

6. The fixation element according to claim 4 or 5, wherein the cleat attachment fixture is configured to be press fit against the cable cleat.

7. The fixation element according to claim 4 or 5, wherein the cleat attachment fixture comprises two parts, wherein the two parts are securable together to form a clamping engagement around the cable cleat for attaching the fixation element to the cable cleat.

8. The fixation element according to claim 7, wherein the cleat attachment fixture further comprises one or more coupling formations for receiving a coupling element for forcing the two parts together to form the clamping engagement.

9. The fixation element according to any preceding claim, wherein the cleat attachment fixture comprises a locating face profiled to mate against a fixing member of the cable cleat.

10. The fixation element according to any one of claims 1 to 3, wherein the high-voltage cable assembly comprises two or more high-voltage cables, and the body is configured to be braced by a band for fixing the body to the high-voltage cables.

11. The fixation element according to claim 10, wherein the body comprises two securing faces profiled to mate against the high-voltage cables respectively, the two securing faces located at opposite sides of the body.

12. A method of installing a fixation element for fixing a fibre optic cable along a high-voltage cable assembly, the method comprising:
connecting a body to the high-voltage cable assembly; and
securing the fibre optic cable by a fixture formation provided on the body configured to secure the fibre optic cable against the high-voltage cable assembly.

13. The method according to claim 12, wherein the step of securing the fibre optic cable comprises an engagement surface of the fixture formation mating against the fibre optic cable.

14. The method according to claim 12 or 13, wherein the method further comprises:
clamping the fibre optic cable against the high-voltage cable assembly by the fixture formation.

15. The method according to any one of claims 12 to 14, wherein the method further comprises:
bracing the body by a band to fix the body to the high-voltage cable assembly, wherein the high-voltage cable assembly comprises two or more high-voltage cables.
